(19) Europäisches Patentamt
European Patent Office
Office européen des brevets

(11) **EP 2 645 127 A1**

(12) **EUROPEAN PATENT APPLICATION**

(43) Date of publication:
**02.10.2013 Bulletin 2013/40**

(51) Int Cl.:
**G01S 19/24** *(2010.01)*　　　**G01S 19/33** *(2010.01)*

(21) Application number: **13159705.6**

(22) Date of filing: **18.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.03.2012　CN 201210092646
11.03.2013　US 201313793242**

(71) Applicant: **O2 Micro, Inc.
Santa Clara, CA 95054 (US)**

(72) Inventors:
• **Gao, Ke**
　**610041 Chengdu (CN)**
• **Liu, Mao**
　**201203 Shanghai (CN)**
• **Zou, Jinghua**
　**610041 Chengdu (CN)**
• **Zhang, Weihua**
　**610041 Chengdu (CN)**

(74) Representative: **Lippert, Stachow & Partner
Patentanwälte
Postfach 30 02 08
51412 Bergisch Gladbach (DE)**

(54) **A navigation bit boundary determination apparatus and a method thereof**

(57)　　A navigation bit boundary determination apparatus and a method thereof is disclosed. The navigation bit boundary determination apparatus includes a Beidou satellite signal receiving module, a position receiving and clock calibration module, a calculation module, and a determination module. The Beidou satellite signal receiving module receives a Beidou Geostationary Earth Orbit (GEO) satellite signal, determines and records a local receiving time of the Beidou GEO satellite signal. The position receiving and clock calibration module receives a GPS time signal and a position of the navigation bit boundary determination apparatus. The calculation module calculates a transmitting time for the Beidou GEO satellite signal. The determination module determines a navigation bit boundary of the Beidou GEO satellite signal.

FIG. 1

**Description**

RELATED APPLICATIONS

This application claims priority to Patent Application Number 201210092646.8, filed on March 31 2012 with State Intellectual Property Office of the P.R. China (SIPO), the specification of which is incorporated herein by reference in its entirety.

FIELD OF THE PRESENT TEACHING

The disclosure relates generally to the field of satellite navigation and positioning, and specifically, the disclosure relates to a navigation bit boundary determination apparatus for determining a navigation bit boundary of a Beidou Geostationary Earth Orbit (hereinafter GEO) signal and a method for determining the navigation bit boundary of a Beidou GEO signal thereof.

BACKGROUND

With the development of electronic industry and computer technology, the satellite navigation and positioning technology is widely used and has important influence on people's daily life besides military applications. At present time, there are four sets of satellite navigation and positioning system in the world, BeiDou (Compass) navigation system, Global Positioning System (GPS), GLONASS system, and Galileo system developed by China, United States, Russia, and Europe, respectively. The GPS system is the earliest and most well-developed satellite navigation and positioning system currently.

The satellite navigation and positioning system usually includes three parts: the space part, the control part, and the user part. The space part contains multiple satellites in orbit. The control part mainly contains a monitoring system, which is composed of several ground stations, such as a master control station, an injection station, and the like. And the user part is a receiver embedded with data processing software, and used to receive satellite signals and to process the positioning and/or navigation based on the received satellite signals.

In operation, the conventional method for positioning or navigating using signals from a Beidou GEO satellite needs to perform bit synchronization. However, the bit synchronization usually takes a lot of time, therefore, the Beidou GEO satellite signals can't be used for quick positioning and navigation calculations.

Generally, according to different known prior information, a receiver configured to receive the satellite signals for positioning and/or navigation purposes based on the received satellite signals can be booted from a hot boot mode, warm boot mode, or cold boot mode. The receiver is booted from the hot boot mode when the satellite ephemeris, which includes the approximate position of the receiver and the accurate satellite clock information, have been received and it usually takes the receiver one to few seconds to boot in this hot boot mode.. The receiver is booted from the warm boot mode when the satellite almanac, which includes the approximate position of the receiver and the accurate satellite clock information, have been received and it usually takes the receiver 30 seconds to boot in this warm boot mode. The receiver is booted from the cold boot mode when the available satellite information (such as, the satellite ephemeris, the satellite almanac, the previous positions of the receiver and the satellite clock is absent and it usually takes the receiver 45 seconds to boot in this cold boot mode. For example, the receiver is booted from the cold boot mode when the satellite almanac information is lost due to initializing the receiver or restarting the receiver, e.g., after the battery of the receiver has run out of charge. The receiver can also be booted from the cold root mode when a relative long time has passed since last positioning calculation and the moving distance of the receiver has exceeded a threshold. Thus, the receiver will take about 45 seconds to be booted.

Traditionally, the bit synchronization is performed to produce error free transmission in the satellite positioning and navigation system, and the bit synchronization is necessary before calculating the satellite ephemeris information. Thus, the step of bit synchronization is necessary when the receiver is in the warm boot mode or the cold boot mode and uses Beidou GEO satellite signals for positioning and navigation purpose. Because the receiver takes several seconds to perform the bit synchronization, the Beidou GEO satellite signals cannot be used for a quick positioning and navigation calculations. However, if the bit synchronization time can be reduced, the Beidou GEO satellite signals can then be used to provide quick positioning and navigation calculations.

The step of bit synchronization can be eliminated when a navigation bit boundary of the Beidou GEO satellite signal is determined. Detection of the navigation bit boundary of the Beidou satellite signal is critical for determining the position of an object. Specifically, if the navigation bit boundary is found, the initial point for capturing and tracking the Beidou GEO satellite signal can be determined and a method that employs a longer continuous integration time, i.e. the cycle of the navigation bit data, for capturing and tracking the GEO satellite signal can also be used. Then, the satellites with weaker signals can be captured and tracked, and the performance of the receiver is also improved.

It is to an apparatus that reduces bit synchronization time that the present application is primarily directed.

SUMMARY

In one embodiment, a navigation bit boundary determination apparatus is disclosed. The navigation bit boundary determination apparatus includes a Beidou satellite signal receiving module, a position receiving and clock calibration module, a calculation module, and a determination module. The Beidou satellite signal receiving module receives a Beidou GEO satellite signal, determines and records a local receiving time of the Beidou GEO satellite signal. The position receiving and clock calibration module receives a GPS time signal and a position of the navigation bit boundary determination apparatus calculated by a GPS receiver based on GPS positioning information and calibrates the local receiving time of the Beidou GEO satellite signal. The calculation module calculates a transmitting time for the Beidou GEO satellite signal based on the position of the navigation bit boundary determination apparatus, a coordinate of the Beidou GEO satellite, and the calibrated receiving time of the Beidou GEO satellite signal. The determination module determines a navigation bit boundary of the Beidou GEO satellite signal based on the transmitting time for the Beidou GEO satellite signal.

In another embodiment, A Beidou satellite receiver with a navigation bit boundary determination apparatus is disclosed. The Beidou satellite receiver determines a navigation bit boundary of a Beidou GEO satellite signal based on a transmitting time for the Beidou GEO satellite signal. A continuous integration time which is adopted by the navigation bit boundary determination apparatus for capturing and tracking the Beidou GEO satellite signals is determined based on the navigation bit boundary of the Beidou GEO satellite signal.

In yet another embodiment, a method for determining a navigation bit boundary of a Beidou GEO satellite signal is disclosed. The method includes the steps of receiving the Beidou GEO satellite signal and recording a local receiving time of the Beidou GEO satellite signal; receiving a GPS time signal and a position of the navigation bit boundary determination apparatus calculated by a GPS receiver based on GPS positioning information and calibrating the local receiving time of the Beidou GEO satellite signal; calculating a transmitting time for the Beidou GEO satellite signal based on the position of the navigation bit boundary determination apparatus, a coordinate of the Beidou GEO satellite, and a calibrated receiving time of the Beidou GEO satellite signal; determining the navigation bit boundary of the Beidou GEO satellite signal based on the transmitting time for the Beidou GEO satellite signal.

BRIEF DESCRIPTION OF THE DRAWINGS

Features and advantages of embodiments of the claimed subject matter will become apparent as the following detailed description proceeds, and upon reference to the drawings, wherein like numerals depict like parts. These exemplary embodiments are described in detail with reference to the drawings. These embodiments are non-limiting exemplary embodiments, in which like reference numerals represent similar structures throughout the several views of the drawings.

FIG. 1 is a block diagram illustrating an example of a navigation bit boundary determination apparatus, in accordance with one embodiment of the present disclosure;

FIG. 2 illustrates a receiver of the present invention communicating with several satellites according to one embodiment of the present disclosure;

FIG. 3 shows a detailed block diagram of a calculation module shown in FIG. 1;

FIG. 4 is a block diagram illustrating an example of a GPS/Beidou dual mode receiver, in accordance with one embodiment of the present disclosure;

FIG. 5 is a flowchart illustrating a method for determining navigation bit boundary, in accordance with one embodiment of the present disclosure;

FIG. 6 is a detailed flowchart of step S540 shown in FIG. 5, in accordance with one embodiment of the present disclosure.

DETAILED DESCRIPTION

Reference will now be made in detail to the embodiments of the present teaching. While the present teaching will be described in conjunction with these embodiments, it will be understood that they are not intended to limit the present teaching to these embodiments. On the contrary, the present teaching is intended to cover alternatives, modifications and equivalents, which may be included within the spirit and scope of the present teaching as defined by the appended claims.

Furthermore, in the following detailed description of the present teaching, numerous specific details are set forth in order to provide a thorough understanding of the present teaching. However, it will be recognized by one of ordinary skill in the art that the present teaching may be practiced without these specific details. In other instances, well known methods, procedures, components, and circuits have not been described in detail as not to unnecessarily obscure aspects of the present teaching.

A navigation bit boundary determination apparatus for determining a navigation bit boundary of a Beidou GEO satellite signal is disclosed. The navigation bit boundary determination apparatus can determine the navigation bit boundary of the Beidou GEO satellite signal based on GPS positioning information. The use of navigation bit boundary determination apparatus eliminates the need for bit synchronization and then the Beidou GEO satellite can be used for fast positioning and navigation responses, which improves the performance of the receiver. In one embodiment, the receiver is equipped with the navigation bit boundary determination apparatus. The Beidou GEO satellite is one of the Beidou satellites, and it is an earth-synchronous satellite orbiting at 36,000 kilometers above the Earth.

The navigation bit boundary determination apparatus includes a Beidou satellite signal receiving module, a position receiving and clock calibration module, a calculation module, and a determination module. The Beidou satellite signal receiving module is configured to receive the Beidou GEO satellite signal, determine and record a local receiving time of the Beidou GEO satellite signal. The position receiving and clock calibration module is configured to receive a GPS time signal and a position of the navigation bit boundary determination apparatus which is calculated by an external GPS receiver based on GPS positioning information, from the external GPS receiver, and calibrate the local receiving time of the Beidou GEO satellite signal which is received from the Beidou satellite signal receiving module to generate a calibrated receiving time according to the received GPS time signal. The calculation module is configured to calculate a transmitting time for the Beidou GEO satellite signal based on the position of the navigation bit boundary determination apparatus received by the position receiving and clock calibration module, a coordinate of the Beidou GEO satellite retrieved from a storage module, and the calibrated receiving time of the Beidou GEO satellite signal calibrated by the position receiving and clock calibration module. The determination module is configured to determine a navigation bit boundary of the Beidou GEO satellite signal based on the transmitting time for the Beidou GEO satellite signal and a continuous integration time which is adopted by the navigation bit boundary determination apparatus for capturing and tracking the Beidou GEO satellite signal based on the navigation bit boundary of the Beidou GEO satellite signal.

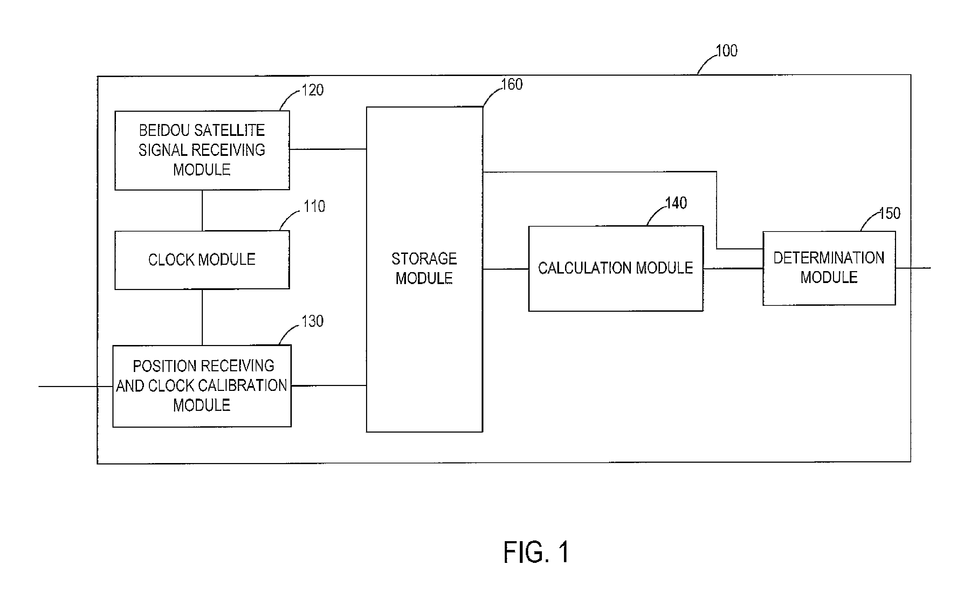

The embodiments of the navigation bit boundary determination apparatus will be described in detail with reference to the drawings FIG. 1 to FIG. 4.

FIG. 1 illustrates an example of a navigation bit boundary determination apparatus 100, in accordance with one embodiment of the present disclosure. As shown in FIG. 1, the navigation bit boundary determination apparatus 100 includes a clock module 110, a Beidou satellite signal receiving module 120, a position receiving and clock calibration module 130, a calculation module 140, a determination module 150, and a storage module 160.

As shown in FIG. 1, the clock module 110 in the navigation bit boundary determination apparatus 100 is configured to provide the local time.

The Beidou satellite signal receiving module 120, which is configured to receive a Beidou GEO satellite signal, determines a local receiving time of the Beidou GEO satellite signal based on the clock module 110 and records the local receiving time of the Beidou GEO satellite signal. The information received by the Beidou satellite signal receiving module 120, for example, the above-mentioned Beidou GEO satellite signal and the recorded local receiving time of the Beidou GEO satellite signal, can be stored in the storage module 160 for being processed or called by the other modules.

The position receiving and clock calibration module 130, which is configured to receive a GPS time signal and a position of the navigation bit boundary determination apparatus 100 calculated by a GPS receiver (not shown in FIG. 1) based on the GPS positioning information, from the GPS receiver, calibrates the clock module 110 and the local receiving time of the Beidou GEO satellite signal received from the Beidou satellite signal receiving module 120 according to the received GPS time signal. For example, the local receiving time of the Beidou GEO satellite signal can be calibrated based on a clock bias $t_u$ obtained from GPS positioning information, and then a calibrated receiving time of the Beidou GEO satellite signal is obtained. The position of the navigation bit boundary determination apparatus 100 calculated by the GPS receiver based on the GPS positioning information is stored in the storage module 160.

In one embodiment, the position of the navigation bit boundary determination apparatus 100 can be calculated by an external GPS receiver (not shown in FIG. 1), and the position receiving and clock calibration module 130 receives the calculated information from the external GPS receiver. The calculated information received by the position receiving and clock calibration module 130 is used to determine the navigation bit boundary of the Beidou GEO satellite signal.

In addition, the local receiving time of the Beidou GEO satellite signal is also calibrated when the clock module 110 is calibrated based on the clock bias $t_u$ of the receiver. The received information obtained by the position receiving and clock calibration module 130 is stored in the storage module 160. Moreover, the storage module 160 further stores other information produced or used by each module in the navigation bit boundary determination apparatus 100. This kind of information includes, but is not limited to, calculation parameters, for example, the coordinate of the Beidou GEO satellite, and temporary data, etc.

The calculation module 140 receives the information stored in the storage module 160 and calculates a transmitting time for the Beidou GEO satellite signal.

The determination module 150 receives the transmitting time for the Beidou GEO satellite signal from the calculation module 140, calculates the navigation bit boundary of the Beidou GEO satellite signal according to the received transmitting time, and determines a continuous integration time which is adopted by the navigation bit boundary determination apparatus 100 for capturing and tracking the Beidou GEO satellite signal according to the determined navigation bit boundary of the Beidou GEO satellite signal.

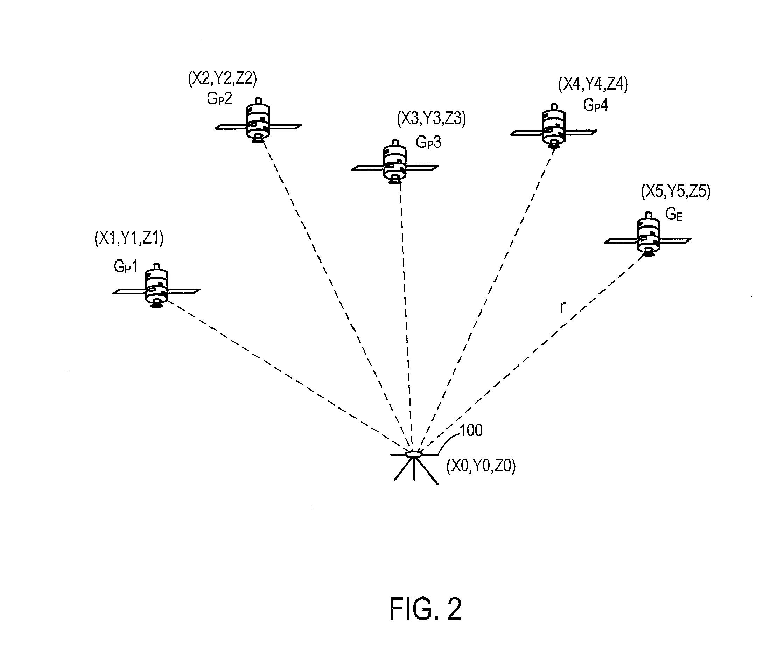

FIG. 2 illustrates application of the navigation bit boundary determination apparatus 100, in accordance with one embodiment of the present disclosure. As shown in FIG. 2, $G_P1 \sim G_P4$ indicate four GPS satellites that can be searched and used by an external GPS receiver and $G_E$ represents a Beidou GEO satellite. The coordinates of $G_P1 \sim G_P4$ are (X1, Y1, Z1) -(X4, Y4, Z4), respectively, are all known. The coordinate of the navigation bit boundary determination apparatus 100 is (X0, Y0, Z0). According to the positions of the four GPS satellites and the GPS time information, four equations can be established to calculate the coordinate of the navigation bit boundary determination apparatus 100, i.e. (X0, Y0, Z0). The detailed equations for calculating the coordinate of the navigation bit boundary determination apparatus 100 are well known by one of ordinary skill in the art, it will be not described herein for brevity and clarity. In a situation, where the external GPS receiver is located near the navigation bit boundary determination apparatus 100, the position of the external GPS receiver can be regarded the same as the position of the navigation bit boundary determination apparatus 100. The position of the navigation bit boundary determination apparatus 100, i.e., the value of the coordinate (X0, Y0, Z0), can be received by the position receiving and clock calibration module 130 from the external GPS receiver. Those skilled in the art will recognize that the operating principle of GPS positioning and the detailed calculation process are well known, and it will be not described herein for brevity and clarity.

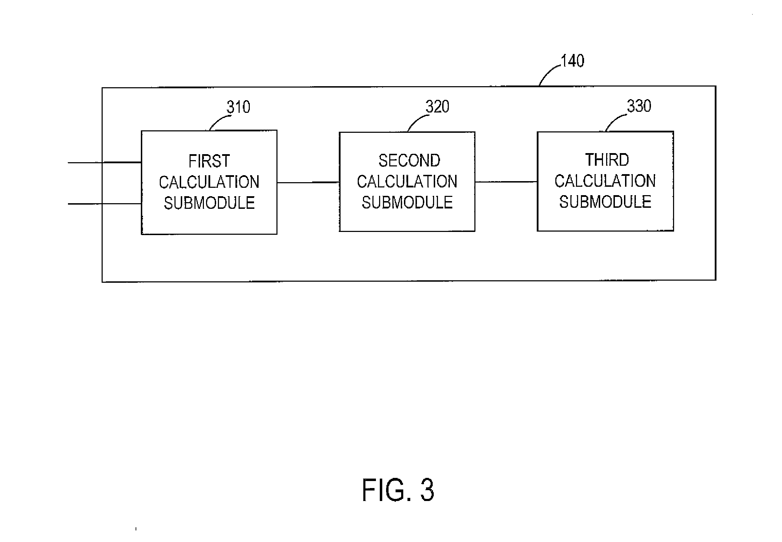

As illustrated in FIG. 2, the Beidou GEO satellite $G_E$ is also an earth-synchronous satellite, and the three-dimensional space coordinate (X5, Y5, Z5) for the Beidou GEO satellite $G_E$ is also well known. The calculation module 140 can calculate the transmitting time for the Beidou GEO satellite signal based on the position of the navigation bit boundary determination apparatus 100, the coordinate of the Beidou GEO satellite $G_E$, and the calibrated receiving time of the Beidou GEO satellite signal. The calculation module 140 can be configured according to the block diagram shown in FIG. 3.

FIG. 3 shows a detailed block diagram of a calculation module 140 illustrated in FIG. 1. As shown in FIG. 3, the calculation module 140 includes a first calculation submodule 310, a second calculation submodule 320 and a third calculation submodule 330.

The first calculation submodule 310 is configured to calculate a distance r between the navigation bit boundary determination apparatus 100 and the Beidou GEO satellite $G_E$ according to the coordinate of the navigation bit boundary determination apparatus 100 and the coordinate of the Beidou GEO satellite $G_E$, wherein the coordinates (X0, Y0, Z0) and (X5, Y5, Z5) indicate the position of the navigation bit boundary determination apparatus 100 and the position of the Beidou GEO satellite $G_E$, respectively. The distance r is calculated according to equation (1-1):

$$r = \sqrt{(x_5 - x_0)^2 + (y_5 - y_0)^2 + (z_5 - z_0)^2} \qquad (1\text{-}1)$$

After the distance r between the navigation bit boundary determination apparatus 100 and the Beidou GEO satellite $G_E$ is calculated, the second calculation submodule 320 calculates a transmission time t for the Beidou GEO satellite signal transmitted from the Beidou GEO satellite $G_E$ to the navigation bit boundary determination apparatus 100. The transmission time t is calculated according to equation (1-2):

$$t = \frac{r}{c} = \frac{\sqrt{(x_5 - x_0)^2 + (y_5 - y_0)^2 + (z_5 - z_0)^2}}{c} \qquad (1\text{-}2)$$

wherein, c represents the speed of light.

Accordingly, the transmission time t for the Beidou GEO satellite signal transmitted from the Beidou GEO satellite $G_E$ to the navigation bit boundary determination apparatus 100 is obtained by using the first calculation submodule 310 and the second calculation submodule 320. The third calculation submodule 330 is configured to calculate the transmitting time for the Beidou GEO satellite signal based on the calibrated receiving time of the Beidou GEO satellite signal which is calibrated by the position receiving and clock calibration module 130 and the transmission time t which is caculated by the second calculation submodule 320. For example, $t_r$ represents the calibrated receiving time of the Beidou GEO satellite signal, and $t_t$ represents the transmitting time for the Beidou GEO satellite signal, then the value

of $t_t$ is equal to $(t_r - t)$ .

The determination module 150 can determine the navigation bit boundary of the Beidou GEO satellite signal based on the transmitting time $t_t$ for the Beidou GEO satellite signal. An example of determining the navigation bit boundary of the Beidou GEO satellite signal based on the transmitting time $t_t$ for the Beidou GEO satellite signal will be described below.

For example, an initial transmitting time for the Beidou GEO satellite signal is to, i.e., the initial transmitting time is the time when the Beidou GEO satellite transmits the satellite signal. In one embodiment, the initial transmitting time $t_0$ for the Beidou GEO satellite signal is a GPS time which is converted from a Real-Time Clock (hereinafter RTC). The method for calculating the GPS time based on the RTC clock is well known by one of ordinary skill in the art. For example, using 21/22th, August, 1999 as a start time, an equation is eastablished as below to calculation present GPS time:

$$t_{GPS}=[dow*24+(hour+zonenum)*60+min]*60+sec+leapsec; \qquad (1-3)$$

wherein, dow represent a day of week; hour, min, and sec represent hour, minute, and second information of the RTC time, respectively; zonenum reppresents time zone of the RTC time; leapsec represents a difference between the present Coordinated Universal Time (UTC) and the GPS time. The calibrated receiving time of the Beidou GEO satellite signal is $t_r$ and the transmitting time for the Beidou GEO satellite signal is $t_t$, an equation is established as below:

$$x=(t_t-t_0) \bmod 2ms; \qquad (1-4)$$

wherein, x is the remainder of a differece of $t_t$ and to devided by 2ms, the $t_t$ and to unit for time is the millisecond, ms. According to the value of x, the navigation bit boundary of the Beidou GEO satellite signal is calculated, and a longer continuous integration time which is adopted by the navigation bit boundary determination apparatus for capturing and tracking the GEO satellite signal can be determined by the determination module in the navigation bit boundary determination apparatus. For example, if the value of x is equal to zero, it means that the Beidou GEO satellite signal is in the navigation bit boundary at time $t_t$, thus, the Beidou GEO satellite signal can be captured and tracked from time $t_t$ within the continuous integration time of 2ms (i.e. the cycle of the navigation bit data), otherwise, the Beidou GEO satellite signal is in the navigation bit boundary at time $(t_t+2-x)$, thus,the Beidou GEO satellite signal can be captured and tracked from time $(t_t+2-x)$ within the continuous integration time of 2ms. Therefore, the navigation bit boundary of Beidou GEO satellite signal can be determined based on the transmitting time for the Beidou GEO satellite signal.

It should be noted that in equation (1-4), $t_t$ and to should be calibrated by the same system time. For example, if $t_t$ is calibrated by the GPS time, then to should also be calibrated by the GPS time, and x is calculated according to equation (1-4).

Generally, the navigation bit rate of the Beidou GEO satellite signal is 500bps (i.e., the cycle of the navigation bit data is 2ms) . In a situation that the navigation bit boundary has not been determined, the Beidou GEO satellite signal should be captured and tracked in a capturing mode within a continuous integration time of 1 ms. However, if a much longer continuous integration time is expected, the step of bit synchronization is required. If the navigation bit boundary of the Beidou GEO satellite signal is determined by using the navigation bit boundary determination apparatus 100 disclosed in present invention, the Beidou GEO satellite signal can be captured and tracked in a capture mode within a much longer continuous integration time without performing bit synchronization, thus, the Beidou GEO satellite signals can be used for quick positioning and navigation calculations. The much longer continuous integration time can be any real number in the range of [1 ms, 2ms] . Preferably, a capture mode of the receiver within the continuous integration time of 2ms can be used for capturing and tracking the Beidou GEO satellite signal. Therefore, comparing to the capture mode within the continuous integration time of 1 ms, a much longer continuous integration time can be used for capturing and tracking the Beidou GEO satellite signal, much weaker satellite signals can be captured and tracked, and the capturing and tracking accuracy can be further increased.

It should be understood that the disclosed embodiment of determining the navigation bit boundary of Beidou GEO satellite signal based on the transmitting time for the Beidou GEO satellite signal is an exemplary, and not meant to be limited. It will be recognized by one of ordinary skill in the art that other embodiments for determining the navigation bit boundary of Beidou GEO satellite signal based on the transmitting time for the Beidou GEO satellite signal should be also included in the present disclosure, and these embodiments will be not repetitively described herein for brevity and clarity.

In another embodiment, the navigation bit boundary determination apparatus interfaces with more than one Beidou GEO satellite. In operation, if multiple Beidou GEO satellites signals are required for positioning and/or navigation calculations, the method for processing these multiple Beidou GEO satellites signals is the same as the above-mentioned method, and it will be not described herein for brevity and clarity.

As described above, the navigation bit boundary determination apparatus 100 can determine the navigation bit boundary of the Beidou GEO satellite signal based on the GPS positioning information received from the external GPS receiver. In other words, the disclosed present disclosure can determine the navigation bit boundary of the Beidou GEO satellite signal without performing bit synchronization. Thus, in satellite positioning and/or navigation technology, the above-mentioned navigation bit boundary determination apparatus 100 can be used for determining the navigation bit boundary of the Beidou GEO satellite signal and also for positioning and/or navigation purposes. The Beidou GEO satellite signals can be used for quick positioning and navigation calculations when the receiver is in the warm boot mode or the cold boot mode without performing bit synchronization, thus, several seconds can be saved. In addition, when the above-mentioned navigation bit boundary determination apparatus 100 is used to determine the navigation bit boundary of the Beidou GEO satellite signal, the much longer continuous integration time can be adopted by the navigation bit boundary determination apparatus 100 for capturing and tracking the Beidou GEO satellite signal, thus, satellites with weaker signals can also be used for positioning and navigation purposes, and the capturing and tracking accuracy of these weaker signals can further be increased.

In one embodiment, a Beidou satellite receiver is disclosed. The Beidou satellite receiver can include a navigation bit boundary determination apparatus 100 as described above.

The Beidou satellite receiver includes a navigation bit boundary determination apparatus, and the navigation bit boundary determination apparatus in the Beidou satellite receiver have similar components and functions as the navigation bit boundary determination apparatus 100 shown in FIG. 1, and it will not be described herein for brevity and clarity.

Moreover, the navigation bit boundary determination apparatus in the Beidou satellite receiver is used to determine the navigation bit boundary of the Beidou GEO satellite signal. According to the navigation bit boundary of the Beidou GEO satellite signal, a continuous integration time is determined, and then the Beidou GEO satellite signal from the Beidou GEO satellite can be captured and tracked within the determined continuous integration time. That is, the Beidou GEO satellite signal can be captured and tracked within the continuous integration time and the above- mentioned navigation bit boundary of the Beidou GEO satellite signal. Because the Beidou GEO satellite signal can be captured and tracked within the continuous integration time, the Beidou GEO satellite signal can then be used without the need for a bit synchronization.

As described above, the navigation bit boundary determination apparatus in the Beidou satellite receiver can be used to determine the navigation bit boundary of the Beidou GEO satellite signal without performing bit synchronization. The Beidou GEO satellite signals can be used for quick positioning and navigation calculations when the receiver is in the warm boot mode or the cold boot mode without performing bit synchronization, therefore, several seconds can be saved. In addition, as the navigation bit boundary of the Beidou GEO satellite signal has been determined, a much longer continuous integration time can be adopted by the navigation bit boundary determination apparatus for capturing and tracking the Beidou GEO satellite signal. Thus, satellites with weaker signals can be captured and tracked, therefore, the capturing and tracking accuracy can be further increased, and then the performance of the receiver is improved.

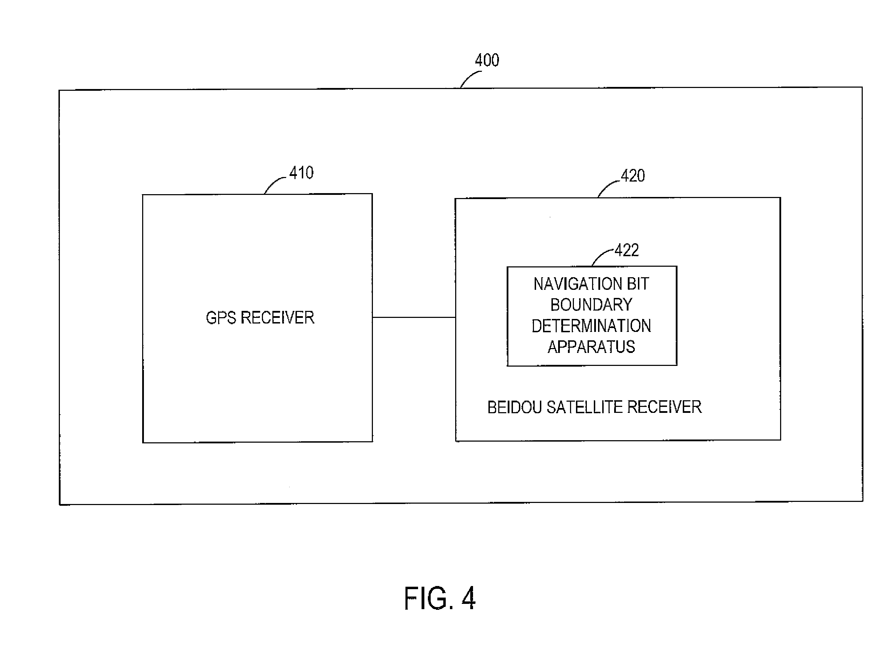

In one embodiment, a GPS/Beidou dual mode receiver is provided. The GPS/Beidou dual mode receiver includes a GPS receiver and a Beidou satellite receiver as described above. FIG. 4 illustrates an example of the GPS/ Beidou dual mode receiver 400, in accordance with one embodiment of the present disclosure.

As shown in FIG. 4, a GPS/Beidou dual mode receiver 400 includes a GPS receiver 410 and a Beidou satellite receiver 420. The Beidou satellite receiver 420 is equipped with a navigation bit boundary determination apparatus 422. The Beidou satellite receiver 420 and the navigation bit boundary determination apparatus 422 have similar components and functions as the Beidou satellite receiver and the navigation bit boundary determination apparatus described above, respectively, and it will not be described herein for brevity and clarity.

The GPS receiver 410 can be one of the commercial GPS receivers, and can obtain a GPS time signal and a position of the GPS/Beidou dual mode receiver 400 according to the GPS positioning information, i.e, the position of the navigation bit boundary determination apparatus 422. The GPS positioning information and the GPS time signal as metioned aboved can be provided to the navigation bit boundary determination apparatus 422 in the Beidou satellite receiver 420. Specifically, in order to determine a three-dimensional space coordinate of the GPS/Beidou dual mode receiver 400, at least four GPS satellites should be captured during the GPS positioning process.

The disclosed GPS/Beidou dual mode receiver 400 includes the navigation bit boundary determination apparatus 422. The disclosed GPS/Beidou dual mode receiver 400 can operate in two kinds of modes in the way like a conventional GPS/Beidou dual mode receiver. For example, the disclosed GPS/Beidou dual mode receiver 400 can either position and/or navigate by using GPS satellites or the Beidou satellites. The disclosed GPS/Beidou dual mode receiver 400 can also determine the navigation bit boundary of the Beidou GEO satellite signal based on the information obtained from GPS positioning information. Such information includes the position of the GPS/Beidou dual mode receiver 400 and the GPS time signal. Thus, the Beidou GEO satellite signals can be used for quick positioning and navigation calculations without performing bit synchronization, thus, saving several seconds. The much longer continuous integration time can be adopted by the navigation bit boundary determination apparatus 422 for capturing and tracking the Beidou GEO satellite signal, and satellites with weaker signals can be captured and tracked, and thus, the capturing and tracking accuracy of these weaker signals can be further increased, and the performance of the receiver is also improved.

In one embodiment, a mobile device can inlude the above-mentioned Beidou satellite receiver or GPS/Beidou dual mode receiver. Specifically, the mobile device can be any one of the navigator, mobile phone, notebook, iPad, PDA (personal digital assistant), multimedia player device, e.g, MP3/MP4 player and E-book, and other devices that can include the GPS receiver 410.

In one embodiment, the above-mentioned mobile device equipped with the Beidou satellite receiver or GPS/Beidou dual mode receiver includes the navigation bit boundary determination apparatus 100 shown in FIG. 1. The Beidou GEO satellite signals can be used for quick positioning and navigation calculations when the receiver is in the warm boot mode or the cold boot mode without performing bit synchronization. Therefore, a much longer continuous integration time can be adopted by the navigation bit boundary determination apparatus for capturing and tracking the Beidou GEO satellite signal, and satellites with weaker signals can be captured and tracked, therefore, the capturing and tracking accuracy can be further increased.

A method for determining the navigation bit boundary of the Beidou GEO satellite signal is provided. An example of the method will be described in combination with FIG. 1, FIG. 5 and FIG. 6.

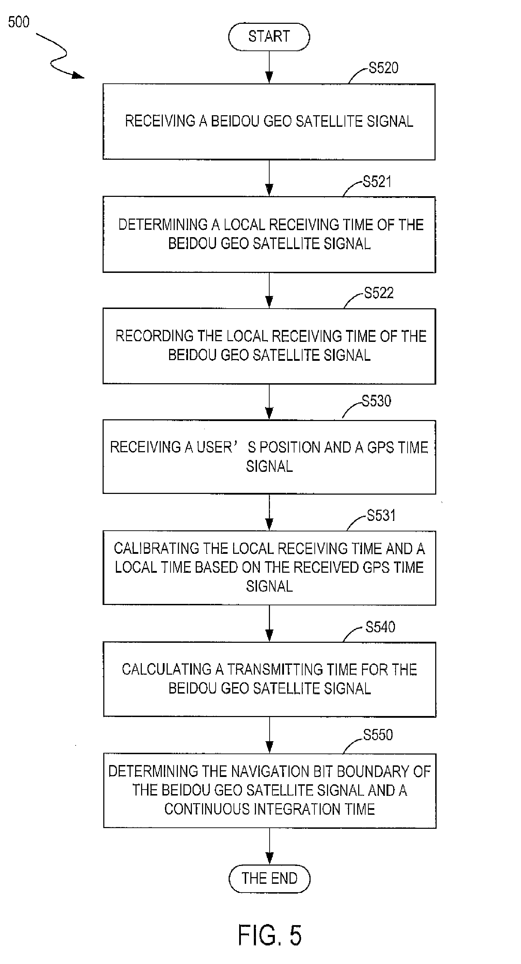

FIG. 5 illustrates a method for determining a navigation bit boundary, in accordance with one embodiment of the present disclosure. As shown in FIG. 5, a flowchart 500 illustrates the method for determining the navigation bit boundary of the Beidou GEO satellite signal. The method disclosed in this embodiment includes the steps of S520-S550. A Beidou satellite signal receiving module 120 in the navigation bit boundary determination apparatus 100 receives a Beidou GEO satellite signal, step S520. The Beidou satellite signal receiving module 120 determines a local receiving time of the Beidou GEO satellite signal according to a clock module 110, step S521. After performing step S521, the Beidou satellite signal receiving module 120 records the local receiving time of the Beidou GEO satellite signal, step S522. A position receiving and clock calibration module 130 in the navigation bit boundary determination apparatus 100 receives a GPS time signal and a position of navigation bit boundary determination apparatus which is calculted by an external GPS receiver based on the GPS positioning information, from the external GPS receiver, step S530. The position receiving and clock calibration module 130 calibrates the local receiving time and the local time based on the received GPS time signal to generate a calibrated receiving time, step S531. The position of the navigation bit boundary determination apparatus 100 and a user's position are used interchangeably in this specification. A calculation module 140 in the navigation bit boundary determination apparatus 100 calculates a transmitting time for the Beidou GEO satellite signal based on the user's position, a coordinate of the Beidou GEO satellite (which is already known), and the calibrated receiving time of the Beidou GEO satellite signal, step S540.

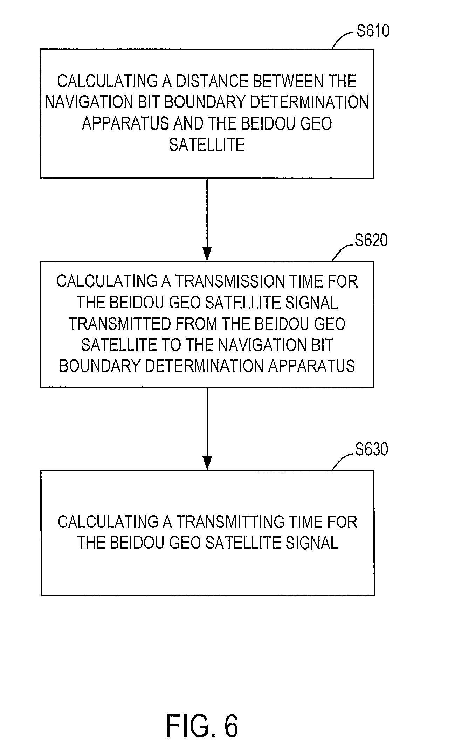

The calculation of the transmitting time for the Beidou GEO satellite signal can be broken down in steps S610~S630 shown in FIG. 6.

As shown in FIG. 6, a first calculation submodule 310 in the calculation module 140 calculates a distance r between the user and the Beidou GEO satellite based on the user's position received at step S530 and the coordinate of the Beidou GEO satellite, step S610.

A second calculation submodule 320 in the calculation module 140 calculates a transmission time t for the Beidou GEO satellite signal transmitted from the Beidou GEO satellite to the navigation bit boundary determination apparatus 100 based on the distance r between the user and the Beidou GEO satellite obtained at step S61 0, step S620.

A third calculation submodule 330 in the calculation module 140 calculates the transmitting time $t_t$ for the Beidou GEO satellite signal based on the transmission time t and the calibrated receiving time of the Beidou GEO satellite signal, step S630.

More specifically, the detailed method of calculations shown at steps S610, S620 and S630 can be implemented by the first calculation submodule 310, the second calculation submodule 320, and the third calculation submodule 330 described in combination with FIG. 3, respectively, and it will not be described herein for brevity and clarity.

Thus, the transmitting time $t_t$ for the Beidou GEO satellite signal is obtained after performing the step S540, i.e., the detailed steps S610~S630. Then, a determination module 150 in the navigation bit boundary determination apparatus 100 determines the navigation bit boundary of the Beidou GEO satellite signal based on the transmitting time $t_t$ for the Beidou GEO satellite signal calculated at step S540, and a continuous integration time which is adopted by the navigation bit boundary determination apparatus for capturing and tracking the Beidou GEO satellite signal, step S550. The detailed method for determining the navigation bit boundary of the Beidou GEO satellite signal based on the transmitting time for the Beidou GEO satellite signal as performed in S550 has been described previously and will not be repeated here. The determined navigation bit boundary of the Beidou GEO satellite signal is used to determine the continuous integration time which is adopted by the navigation bit boundary determination apparatus 100 for capturing and tracking the Beidou GEO satellite signal. The continuous integration time can be any duration between 1 ms and 2ms.

As described above, the method for determining the navigation bit boundary can determine the navigation bit boundary of the Beidou GEO satellite signal by using GPS positioning information received from the external GPS receiver, in accordance with one embodiment of the present disclosure. In another words, the navigation bit boundary of the Beidou GEO satellite signal can be determined without performing bit synchronization. Thus, in a satellite positioning and/or navigation technology, the above-mentioned navigation bit boundary determination apparatus can be used for determining the navigation bit boundary of the Beidou GEO satellite signal and for positioning or navigation. For example, the Beidou GEO satellite signals can be used for quick positioning and navigation calculations when the receiver is in the warm boot mode or the cold boot mode without performing bit synchronization, thus, several seconds can be saved. In addition, when the above-mentioned navigation bit boundary determination apparatus is used to determine the navigation bit boundary of the Beidou GEO satellite signal, a much longer continous integration time can be adopted by the navigation bit boundary determination apparatus for capturing and tracking the Beidou GEO satellite signal, thus, satellites with weaker signals can be captured and tracked, therefore, the capturing and tracking accuracy can be further increased.

In one embodiment, satellite navigation and positioning methods are provided, in accordance with one embodiment of the present disclosure. The satellite navigation and positioning methods includes a method of processing the navigation and positioning based on the Beidou satellite signals, for example, the Beidou GEO satellite signals and/or Beidou Non Geostationary Earth Orbit (NGEO) satellite signals. In this method, the navigation and positioning processing method is peformed by a conventional Beidou satellite receiver. This method can be named as a Beidou single mode navigation and positioning processing method for short. The satellite navigation and positioning methods further includes a method of processing the navigation and positioning by using the above-mentioned method for detemining the navigation bit boundary. This method is also know as an auxiliary navigation and positioning processing method.

The above mentioned auxiliary navigation and positioning processing method further includes the steps of determining the navigation bit boundary of the Beidou GEO satellite signal and determining a continuous integration time which is adopted by a navigation bit boundary determination apparatus for capturing and tracking the Beidou GEO satellite signal based on the navigation bit boundary of the Beidou GEO satellite signal in order to position an object by the Beidou GEO satellite without performing bit synchronization.

In another embodiment, the satellite navigation and positioning methods futher include a GPS single mode navigation and positioning processing method, the Beidou single mode navigation and positioning processing method and the auxiliary navigation and positioning processing method. That is, the navigation and positioning processing is performed by a conventional GPS receiver. In this situation, the auxiliary navigation and positioning processing method can be done by some processing steps operated in the GPS single mode navigation and positioning processing method. Moreover, these three processing methods of the navigation and positioning processing can be randomly and independently selected according to the user's requirements or actual situation.

Accordingly, the navigation bit boundary of the Beidou GEO satellite signal can be determined by performing the above- mentioned satellite navigation positioning method based on the GPS positioning information. The Beidou GEO satellite signals can be used for quick positioning and navigation calculations when the receiver is in the warm boot mode or the cold boot modewithout performing bit synchronization.

While the foregoing description and drawings represent embodiments of the present disclosure, it will be understood that various additions, modifications, and substitutions may be made therein without departing from the spirit and scope of the principles of the present disclosure as defined in the accompanying claims. One skilled in the art will appreciate that the present disclosure may be used with many modifications of form, structure, arrangement, proportions, materials, elements, and components and otherwise, used in the practice of the disclosure, which are particularly adapted to specific environments and operative requirements without departing from the principles of the present disclosure. The presently disclosed embodiments are therefore to be considered in all respects as illustrative and not restrictive, the scope of the present disclosure being indicated by the appended claims and their legal equivalents, and not limited to the foregoing description.

## Claims

1. A navigation bit boundary determination apparatus, for determining a navigation bit boundary of a Beidou Geostationary Earth Orbit (GEO) satellite signal, comprising:

   a Beidou satellite signal receiving module for receiving the Beidou GEO satellite signal, determining and recording a local receiving time of the Beidou GEO satellite signal;
   a position receiving and clock calibration module for receiving a GPS time signal and a position of the navigation bit boundary determination apparatus calculated by an external GPS receiver based on the GPS positioning information, from the external GPS receiver, and calibrating the local receiving time of the Beidou GEO satellite signal received from the Beidou satellite signal receiving module according to the received GPS time signal;
   a calculation module for calculating a transmitting time for the Beidou GEO satellite signal based on the position of the navigation bit boundary determination apparatus received by the position receiving and clock calibration module, a coordinate of the Beidou GEO satellite retrieved from a storage module, and a calibrated receiving time of the Beidou GEO satellite signal calibrated by the position receiving and clock calibration module; and a determination module for determining the navigation bit boundary of the Beidou GEO satellite signal based on the transmitting time for the Beidou GEO satellite signal.

2. The navigation bit boundary determination apparatus of claim 1, wherein the navigation bit boundary of the Beidou GEO satellite signal is used to determine a continuous integration time which is adopted by the navigation bit boundary determination apparatus for capturing and tracking the Beidou GEO satellite signal by the determination module.

3. The navigation bit boundary determination apparatus of claim 2, wherein the continuous integration time is between 1 ms and 2ms.

4. The navigation bit boundary determination apparatus of claims 1, 2 or 3, wherein the calculation module further comprising:

a first calculation submodule for calculating a distance between the navigation bit boundary determination apparatus and the Beidou GEO satellite based on the position of the navigation bit boundary determination apparatus and the coordinate of the Beidou GEO satellite;
a second calculation submodule for calculating a transmission time for the Beidou GEO satellite signal transmitted from the Beidou GEO satellite to the navigation bit boundary determination apparatus based on the distance between the navigation bit boundary determination apparatus and the Beidou GEO satellite; and
a third calculation submodule for calculating the transmitting time for the Beidou GEO satellite signal based on the calibrated receiving time and the transmission time for the Beidou GEO satellite signal.

5. The navigation bit boundary determination apparatus of one of claims 1 to 4, further comprising:

a clock module operable for providing a local time,
wherein the Beidou satellite signal receiving module determines the local receiving time according to the local time received from the clock module.

6. The navigation bit boundary determination apparatus of one of claims 1 to 5, further comprising:

a storage module for storing information,
wherein the storage module stores the local receiving time determined by the Beidou satellite signal receiving module, and the position of the navigation bit boundary determination apparatus received by the position receiving and clock calibration module.

7. A Beidou satellite receiver comprising:

a navigation bit boundary determination apparatus for determining a navigation bit boundary of a Beidou Geostationary Earth Orbit (GEO) satellite signal, according to one of claims 1 to 6.

8. A method for determining a navigation bit boundary of a Beidou Geostationary Earth Orbit (GEO) satellite signal, comprising the steps of:

receiving the Beidou GEO satellite signal from the Beidou GEO satellite by a Beidou satellite signal receiving module;
recording a local receiving time of the Beidou GEO satellite signal by the Beidou satellite signal receiving module;
receiving a GPS time signal and a position of the navigation bit boundary determination apparatus calculated by an external GPS receiver based on the GPS positioning information by a position receiving and clock calibration module, from the external GPS receiver;
calibrating the local receiving time of the Beidou GEO satellite signal by the position receiving and clock calibration module to generate a calibrated receiving time;
calculating a transmitting time for the Beidou GEO satellite signal based on the position of the navigation bit boundary determination apparatus received by the position receiving and clock calibration module, a coordinate of the Beidou GEO satellite retrieved from a storage module, and the calibrated receiving time of the Beidou

**EP 2 645 127 A1**

GEO satellite signal calibrated by the position receiving and clock calibration module; and
determining the navigation bit boundary of the Beidou GEO satellite signal based on the transmitting time for
the Beidou GEO satellite signal by a determination module.

9. The method for determining the navigation bit boundary of claim 8, further comprising:

determining a continuous integration time which is adopted by the navigation bit boundary determination apparatus for capturing and tracking the Beidou GEO satellite signal based on the navigation bit boundary of the Beidou GEO satellite signal by the determination module.

10. The method for determining the navigation bit boundary of claim 9,
wherein the continuous integration time is between 1 ms and 2ms.

11. The method for determining the navigation bit boundary of claim 8, 9 or 10, further comprising:

calculating a distance between the navigation bit boundary determination apparatus and the Beidou GEO satellite based on the position of the navigation bit boundary determination apparatus and the coordinate of the Beidou GEO satellite;
calculating a transmission time for the Beidou GEO satellite signal transmitted from the Beidou GEO satellite to the navigation bit boundary determination apparatus based on the distance between the navigation bit boundary determination apparatus and the Beidou GEO satellite; and
calculating the transmitting time for the Beidou GEO satellite signal based on the calibrated receiving time and the transmission time for the Beidou GEO satellite signal.

12. The method for determining the navigation bit boundary of one of claims 8 to 11, further comprising the step of:

determining the local receiving time of the Beidou GEO satellite signal based on a local time provided by a clock module.

13. The method for determining the navigation bit boundary of one of claims 8 to 12, further comprising the step of:

storing the position of the navigation bit boundary determination apparatus received by the position receiving and clock calibration module, and the local receiving time determined by the Beidou satellite signal receiving module into the storage module.

**11**

FIG. 1

FIG. 2

FIG. 3

FIG. 4

500

START

S520

RECEIVING A BEIDOU GEO SATELLITE SIGNAL

S521

DETERMINING A LOCAL RECEIVING TIME OF THE BEIDOU GEO SATELLITE SIGNAL

S522

RECORDING THE LOCAL RECEIVING TIME OF THE BEIDOU GEO SATELLITE SIGNAL

S530

RECEIVING A USER' S POSITION AND A GPS TIME SIGNAL

S531

CALIBRATING THE LOCAL RECEIVING TIME AND A LOCAL TIME BASED ON THE RECEIVED GPS TIME SIGNAL

S540

CALCULATING A TRANSMITTING TIME FOR THE BEIDOU GEO SATELLITE SIGNAL

S550

DETERMINING THE NAVIGATION BIT BOUNDARY OF THE BEIDOU GEO SATELLITE SIGNAL AND A CONTINUOUS INTEGRATION TIME

THE END

FIG. 5

```
                                                        ┌─S610
┌──────────────────────────────────────┐
│                                        │
│    CALCULATING A DISTANCE BETWEEN THE  │
│  NAVIGATION BIT BOUNDARY DETERMINATION │
│      APPARATUS AND THE BEIDOU GEO      │
│              SATELLITE                 │
│                                        │
└──────────────────────────────────────┘
                    │
                    ▼
                                                        ┌─S620
┌──────────────────────────────────────┐
│                                        │
│     CALCULATING A TRANSMISSION TIME FOR│
│      THE BEIDOU GEO SATELLITE SIGNAL   │
│      TRANSMITTED FROM THE BEIDOU GEO   │
│       SATELLITE TO THE NAVIGATION BIT  │
│     BOUNDARY DETERMINATION APPARATUS   │
│                                        │
└──────────────────────────────────────┘
                    │
                    ▼
                                                        ┌─S630
┌──────────────────────────────────────┐
│                                        │
│                                        │
│     CALCULATING A TRANSMITTING TIME FOR│
│       THE BEIDOU GEO SATELLITE SIGNAL  │
│                                        │
│                                        │
└──────────────────────────────────────┘
```

# FIG. 6

Europäisches
Patentamt
European
Patent Office
Office européen
des brevets

**EUROPEAN SEARCH REPORT**

Application Number

EP 13 15 9705

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2009/160704 A1 (ZHAO LIANG [US] ET AL) 25 June 2009 (2009-06-25) * figure 3 * * paragraph [0027] * * paragraph [0030] * * paragraph [0035] * * paragraph [0038] * ----- | 1-13 | INV. G01S19/24 G01S19/33 |
| Y | EP 1 160 582 A2 (NOKIA MOBILE PHONES LTD [FI] NOKIA CORP [FI]) 5 December 2001 (2001-12-05) * paragraph [0012] * * paragraph [0035] - paragraph [0036] * ----- | 1-13 | |
| A | US 6 075 987 A (CAMP WILLIAM O JR [US] ET AL) 13 June 2000 (2000-06-13) * column 8, line 37 - line 59 * ----- | 1-13 | |
| A | US 2010/127925 A1 (CONROY CORMAC S [US] ET AL) 27 May 2010 (2010-05-27) * the whole document * ----- | 1-13 | TECHNICAL FIELDS SEARCHED (IPC) G01S |

The present search report has been drawn up for all claims

| Place of search | Date of completion of the search | Examiner |
|---|---|---|
| Munich | 23 July 2013 | Hekmat, Taymoor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 15 9705

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2013

| Patent document cited in search report | | Publication date | Patent family member(s) | | Publication date |
|---|---|---|---|---|---|
| US 2009160704 | A1 | 25-06-2009 | CA | 2710465 A1 | 09-07-2009 |
| | | | CN | 101932949 A | 29-12-2010 |
| | | | EP | 2232289 A1 | 29-09-2010 |
| | | | EP | 2584377 A1 | 24-04-2013 |
| | | | JP | 2011512513 A | 21-04-2011 |
| | | | KR | 20100094588 A | 26-08-2010 |
| | | | KR | 20120049952 A | 17-05-2012 |
| | | | KR | 20120128169 A | 26-11-2012 |
| | | | RU | 2010130164 A | 27-01-2012 |
| | | | TW | 200935082 A | 16-08-2009 |
| | | | US | 2009160704 A1 | 25-06-2009 |
| | | | US | 2012032846 A1 | 09-02-2012 |
| | | | WO | 2009086016 A1 | 09-07-2009 |
| EP 1160582 | A2 | 05-12-2001 | EP | 1160582 A2 | 05-12-2001 |
| | | | FI | 20001300 A | 01-12-2001 |
| | | | US | 2002003492 A1 | 10-01-2002 |
| US 6075987 | A | 13-06-2000 | AR | 014664 A1 | 28-03-2001 |
| | | | AU | 2491099 A | 15-09-1999 |
| | | | BR | 9908287 A | 31-10-2000 |
| | | | CN | 1292094 A | 18-04-2001 |
| | | | CO | 4830483 A1 | 30-08-1999 |
| | | | EE | 200000494 A | 15-02-2002 |
| | | | EP | 1057041 A1 | 06-12-2000 |
| | | | US | 6075987 A | 13-06-2000 |
| | | | WO | 9944073 A1 | 02-09-1999 |
| US 2010127925 | A1 | 27-05-2010 | CN | 102224429 A | 19-10-2011 |
| | | | EP | 2370829 A1 | 05-10-2011 |
| | | | JP | 2012510073 A | 26-04-2012 |
| | | | KR | 20110091024 A | 10-08-2011 |
| | | | TW | 201030363 A | 16-08-2010 |
| | | | US | 2010127925 A1 | 27-05-2010 |
| | | | WO | 2010068456 A1 | 17-06-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210092646